# EUROPEAN PATENT APPLICATION

(11) **EP 1 465 185 A2**
(43) Date of publication of application: **06.10.2004**
(21) Application number: 04251962.9
(22) Date of filing: 01.04.2004
(51) Int. Cl.: G11B 20/00, G11B 27/34

(54) **Apparatus and method for duplicating digital data**

(30) Priority: 04.04.2003 KR 2003021414
(71) Applicant: Samsung Electronics Co., Ltd., Suwon-si, Gyeonggi-do (KR)
(72) Inventor: Bak, Bong-gil, Dongjak-gu Seoul (SE)
(74) Representative: Robinson, Ian Michael

(57) **Abstract**

An apparatus and method of duplicating data from a first data storage medium (110) to a second data storage medium (150) includes a controller (130) which receives the data stored in the first data storage medium (110), duplicates the data to the second data storage medium (150), extracts sample data, which is used to indicate a progress in data duplication, from the data, and outputs the sample data; and a data decoder (170) which receives, decodes, and outputs the sample data from the sample data. Accordingly, it is possible to extract and reproduce sample data from data that is being duplicated from one data storage medium to another data storage medium, during duplication of the data. For this reason, a user can easily check a progress in the data duplication and the contents of the data. Further, duplication and reproduction of data are performed at the same time thus removing boredom during the data duplication.

## Description

The present invention relates to an apparatus and method of duplicating digital data, and more particularly, to an apparatus and method of duplicating digital data and effectively displaying the progress in the data duplication.

Advancement in development of semiconductor memory devices and digital data storage media increases use of digital data recording/reproducing apparatuses instead of analog data recording/reproducing apparatuses.

The digital data recording/reproducing apparatus compresses and stores data, which is transmitted in the form of an analog or digital video signal, in a digital manner, and decodes and displays the stored data on a display such as a television or a monitor at a desired time.

Various types of digital video recording/reproducing apparatuses into which a hard disc and a high-capacity removable storage medium are attached as data storage media, have recently come onto the markets.

The removable recording medium may be a memory card, or an optical recording medium such as a CD-R, a CD-RW, a DVD-R, a DVD-RW, a DVD+R, a DVD-RAM, and a DVD+RW.

In general, a digital video recording/reproducing apparatus including two kinds of data storage media is capable of duplicating data recorded on a data storage medium into another data storage medium.

However, a conventional digital video recording/reproducing apparatus has limited functions. For instance, during duplication of data, the conventional apparatus is capable of displaying only a progress in data duplication on a screen using a percentage, a graph, time left until termination of the data duplication, or characters.

According to the present invention there is provided an apparatus and method as set forth in the appended claims. Preferred features of the invention will be apparent from the dependent claims, and the description which follows.

The present invention provides an apparatus and method of duplicating digital data and effectively displaying both a progress in data duplication and the contents of the digital data.

According to one aspect of the present invention, there is provided an apparatus duplicating data from a first data storage medium to a second data storage medium, the apparatus including a controller which receives the data stored in the first data storage medium, duplicates the data to the second data storage medium, extracts sample data, which is used to indicate a progress in data duplication, from the data, and outputs the sample data; and a data decoder which receives, decodes, and outputs the sample data from the controller.

According to another aspect of the present invention, there is provided a method of duplicating data from a first data storage medium to a second data storage medium, the method including reading the data from the first data storage medium; duplicating the data to the second data storage medium; and extracting and reproducing sample data, which is used to indicate a progress in the data duplication, from the data in accordance with the progress in the data duplication.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a block diagram of a digital data duplicating apparatus according to an embodiment of the present invention;
Figure 2 is a block diagram of an apparatus for duplicating video object data, according to an embodiment of the present invention;
Figure 3 illustrates a data structure of key picture placement information;
Figure 4 is a block diagram of an apparatus duplicating still image data, according to an embodiment of the present invention;
Figure 5 is a block diagram of an apparatus duplicating speech data, according to an embodiment of the present invention; and
Figure 6 is a flowchart illustrating a method of duplicating digital data, according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

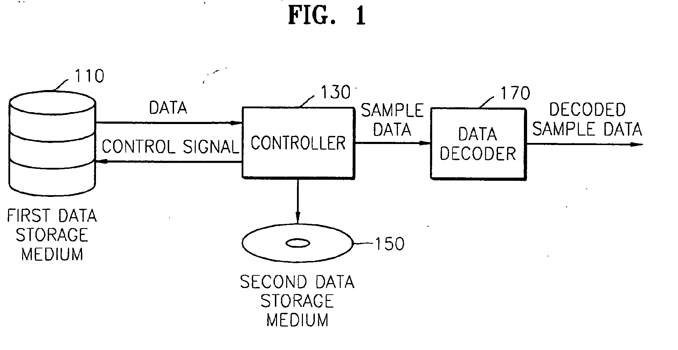

Figure 1 is a block diagram illustrating a structure of a digital data duplicating apparatus according to an embodiment of the present invention. Referring to Figure 1, the apparatus includes a first data storage medium 110, a controller 130, a second data storage medium 150, and a data decoder 170.

The first data storage medium 110 stores the original data to be duplicated to the second data storage medium 150. Although the type of the first data storage medium 110 is not limited, a hard disc drive is used as the first data storage medium 110 in the digital data duplicating apparatus according to an embodiment of the present invention for the sake of convenience in this disclosure.

Although the type of the second data storage medium 150 is also not limited, the second data storage medium 150 is a removable data storage medium that is an optical recording medium, for example.

Alternatively, the first and second data storage media 110 and 150 may be an optical recording medium and a hard disc drive, respectively. It is understood that other combinations of recording media are possible.

Upon receiving a user command to duplicate the original data stored in the first data storage medium 110 to the second data storage medium 150, the controller 130 reads out the original data to a buffer (not shown).

The controller 130 stores the original data in the buffer, sends it to the second data storage medium 150, extracts a portion of the original data from the buffer as sample data, and outputs the sample data to the data decoder 170.

The data decoder 170 decodes the sample data output from the controller 130 in accordance with a predetermined decoding rule and outputs the result of decoding to a reproducing apparatus (not shown).

The reproduction of the sample data, which is extracted from the original data during the duplication, allows the user to understand the progress in data duplication and the contents of the data.

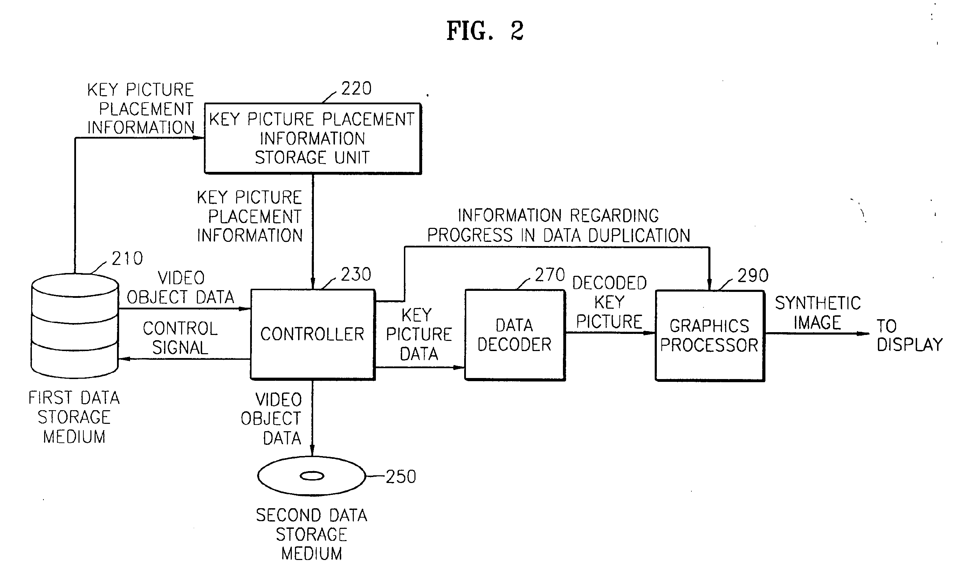

Hereinafter, embodiments of apparatuses duplicating video object data, still image data, and speed data, respectively, according to the present invention, will be described in detail with reference to Figures 2 through 4.

Figure 2 is a block diagram of an apparatus duplicating video object data, according to an embodiment of the present invention. Referring to Figure 2, the apparatus includes a first data storage medium 210, a key picture placement information storage medium 220, a controller 230, a second data storage medium 250, a data decoder 270, and a graphics processor 290.

In general, there are various encoding methods of compressing and storing video object data. The encoding methods can be classified by several criteria. For instance, a method of compressing and storing video object data can be selected depending on whether there is a picture, which is to be encoded or decoded, which requires other pictures. In this case, a picture that is encoded or decoded without other pictures but is used to encode or decode other pictures, is called a key picture.

For instance, the MPEG-2 video standards adopt a Group Of Picture (GOP) definition that one GOP contains at least one Intra picture (I-picture), a plurality of Bidirectionally predictive pictures (B-pictures), and a Predictive picture (P-picture). An encoded B-picture and P-picture are decoded by motion compensation using a decoded I-picture, whereas the I-picture is decoded without other pictures. Thus, the I-picture corresponds to the key picture.

Meanwhile, video encoding standards such as Motion JPEG (MJPEG) standards are used to encode only key pictures that do not require other pictures for decoding of an encoded picture.

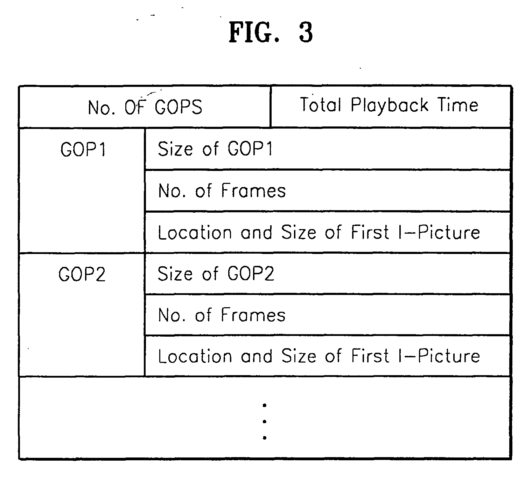

First, the operations of an apparatus duplicating video object data, according to an embodiment of the present invention, will be described with reference to Figures 2 and 3. Here, the video object data includes picture data, such as MPEG data, other than the key picture data.

The first data storage medium 210 stores video object data that is to be duplicated to the second data storage medium 250. The video object data stored in the first data storage medium 210 is compressed in accordance with the MPEG-2 video standards.

When receiving a user command to duplicate video object data stored in the first data storage medium 210 to the second data storage medium 250, the controller 230 reads out the video object data to a buffer (not shown) in the controller.

Also, the controller 230 controls the first data storage medium 210 to output key picture placement information stored in the first data storage medium 210 to the key picture placement information storage unit 220.

Figure 3 illustrates an example of a data structure of key picture placement information. Referring to Figure 3, information regarding the number of GOPs, which are contained in video object data compressed according to the MPEG-2 video standards, and information regarding total playback time of the entire video object data are recorded in the header of the key picture placement information.

The key picture placement information also specifies the respective GOPs contained in the video object data. The information regarding each GOP specifies the size of GOP, i.e., the amount of data, the total frame number of GOP, and the location and size (or amount of data) of a first I-picture.

In the case where a first picture of every GOP is predetermined to be an I-picture, the key picture placement information does not need to include information regarding the locations of the respective first I-pictures.

The controller 230 sends the video object data stored in the buffer to the second data storage medium 250, and also receives the key picture placement information, which specifies the locations of I-pictures which are key pictures, from the key picture placement information storage unit 220. Next, the controller 230 extracts only I-pictures from the video object data stored in the buffer and outputs the extracted I-pictures to the data decoder 270.

For this reason, the data decoder 270 decodes only the I-pictures among the entire video object data, which is to be duplicated to the second data storage medium 250, so as to reproduce and display only the I-pictures, not entire images, on a display (not shown).

The data decoder 270, which decodes data encoded in accordance with the MPEG-2 video standards, decodes the I-pictures output from the controller 230 and outputs the result of the decoding to the graphics processor 290.

A speed of reading/writing data from/to a data storage medium is several times or several tens times faster than a speed of supplying MPEG video data required for data reproduction. Thus, according to the present invention, while duplicating data between two data storage media built in a data recording/reproducing apparatus at a high speed, decoding and reproducing all of the encoded video data in order to reproduce and display a picture that is being duplicated is not feasible. That is, a few pictures should be selected and reproduced. Thus, key pictures, which can be decoded without other pictures, are selected and decoded.

The controller 230 extracts the I-picture data from the buffer and outputs the I-picture data to the data decoder 270 at the same speed as a speed of duplicating the video object data to the second data storage medium 250. In other words, the controller 230 makes the reproduction of the I-pictures be in phase with the duplication of the video object data. If the speed of duplicating the video object data to the second data storage medium 250 is faster than the speed of decoding and reproducing MPEG data, video displayed on the display is reproduced in fast forward motion.

Also, the controller 230 generates information regarding a current progress in data duplication, based on a total size of MPEG data to be duplicated and a recording or reading speed of the first or second data storage medium 210 or 250 whose recording or reading speed is slower. The information specifies a point of time when the data duplication is expected to end, time left until the end of the data duplication, and so on, using percentages, graphs, and characters.

Next, the controller 230 outputs the information regarding the progress to the graphics processor 290. The graphics processor 290 receives the decoded I-pictures from the data decoder 270, receives the information regarding the progress in data duplication from the controller 230, combines the two, and outputs the synthetic image to the display.

Accordingly, the user can watch both the contents of the MPEG data that is being duplicated and a progress in the data duplication, using the display.

Hereinafter, the operation of an apparatus duplicating video object data such as MJPEG, according to an embodiment of the present invention, will be briefly described with reference to Figure 2. Here, MJPEG data is video object data that contains encoded pictures that are all key pictures.

Compared to the MPEG data, the video object data such as the MJPEG data can be duplicated similarly when duplicating the MPEG data. However, because the video object data such as the MJPEG data contains only key pictures, information regarding the locations of all of the key pictures is stored in the key picture placement information storage unit 220. Also, a method of extracting sample data from the MJPEG data for data decoding using the controller 230 is different from that of extracting the sample data from the MPEG data.

The controller 230 transmits the video object data stored in the buffer to the second data storage medium 250, and also, receives information specifying the locations of all of the pictures contained in the video object data from the key picture placement information storage unit 220, extracts a few pictures from the pictures stored in the buffer, and outputs the extracted pictures to the data decoder 270.

Because pictures encoded in accordance with the MJPEG video standards can be decoded without other pictures, any picture can be selected from the buffer and decoded.

The controller 230 extracts and outputs the picture data to the data decoder 270 so that reproduction of pictures is in phase with duplication of the video object data.

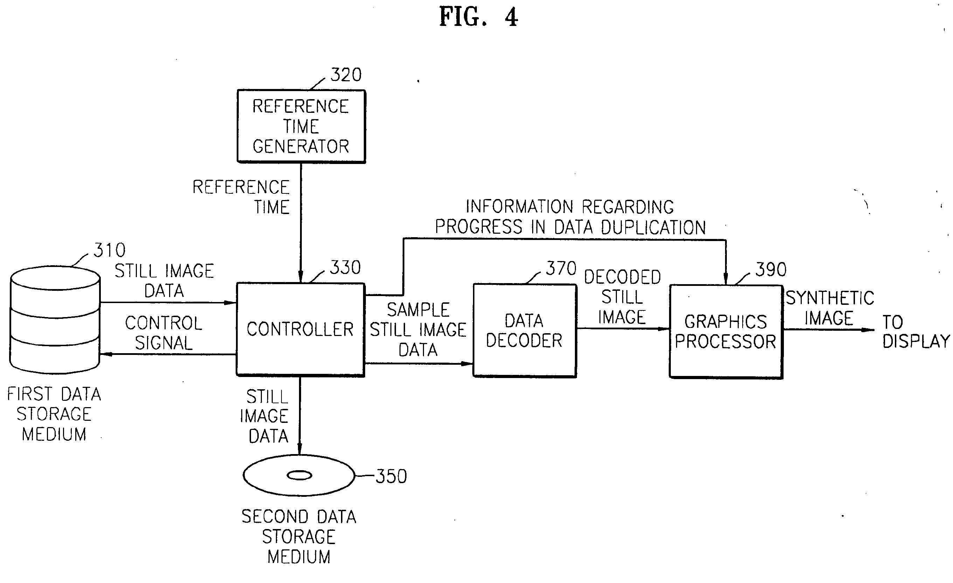

The operation of an apparatus duplicating still image data containing a plurality of compressed still images, according to an embodiment of the present invention, will now be described with reference to Figure 4. Figure 4 is a block diagram of an apparatus duplicating still image data, according to an embodiment of the present invention. Referring to Figure 4, the apparatus includes a first data storage medium 310, a reference time generator 320, a controller 330, a second data storage medium 350, a data decoder 370, and a graphics processor 390.

The first data storage medium 310 stores still image data that is to be duplicated to the second data storage medium 350. The still image data contains a plurality of encoded still images. The still image data stored in the first data storage medium 310 may be data compressed in the JPEG video standards.

When receiving a user command to duplicate JPEG data from the first data storage medium 310 to the second data storage medium 350, the controller 330 reads out the JPEG data to a buffer (not shown) in the controller 330 from the first data storage medium 310.

The controller 330 transmits the JPEG data stored in the buffer to the second data storage medium 350, and is informed of a reference point of time from the reference time generator 320, extracts a predetermined number of still image data sheets from the buffer for a predetermined time, and outputs the extracted still image data to the data decoder 370.

Meanwhile, the number of still images displayed per time unit is limited in consideration of the visual characteristics of human beings. If several still images are displayed on a screen per second, a user will not only have eyestrain but also will have difficulty distinguishing between different still images because a sheet of a still image is displayed for a very short time. In general, one still image is displayed per second, though other display rates may be used.

The data decoder 370, which decodes encoded still images in accordance with the JPEG video standards, decodes the still image data output from the controller 330 and outputs the result of decoding to the graphics processor 390.

Further, the controller 330 generates information regarding a current progress in data duplication, based on a total size of JPEG data to be duplicated and a recording or reading speed of the first or second data storage medium 310 or 350 whose recording or reading speed is slower. The information specifies a point of time when the data duplication is expected to end, time left until the end of the data duplication, and so on, using percentages, graphs, and characters.

The controller 330 outputs the information regarding the data duplication progress to the graphics processor 390.

The graphics processor 390 receives the decoded still image from the data decoder 370, receives the information regarding the progress from the controller 330, combines the still image with the information regarding the data duplication progress, and outputs the result of the combination to a display (not shown).

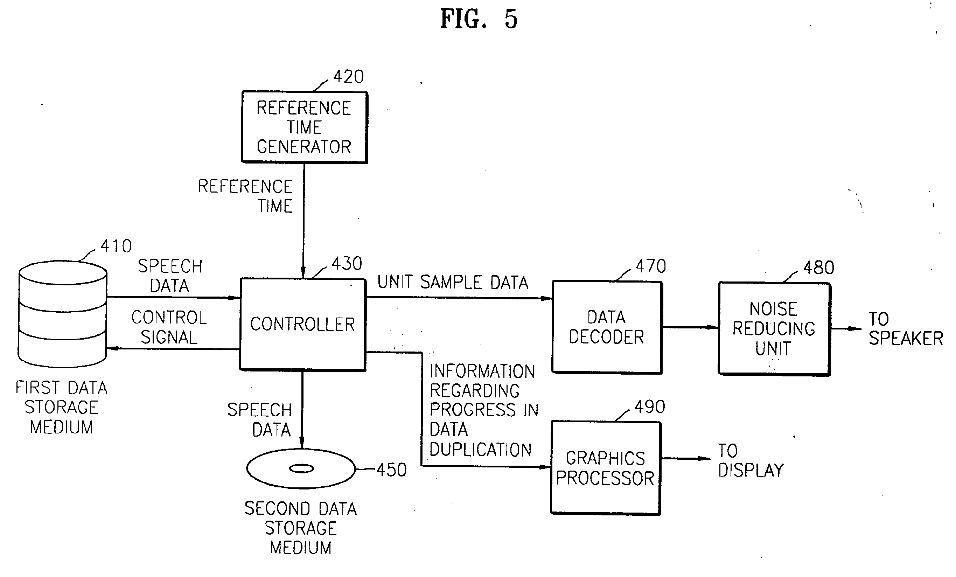

Hereinafter, the operation of an apparatus duplicating speech data containing compressed speech signals, according to an embodiment of the present invention, will be described with reference to Figure 5.

Figure 5 is a block diagram of an apparatus duplicating speech data, according to an embodiment of the present invention. Referring to Figure 5, the apparatus includes a first data storage medium 410, a reference time generator 420, a controller 430, a second data storage medium 450, a data decoder 470, a noise reducing unit 480, and a graphics processor 490.

The first data storage medium 410 stores speech or voice data to be duplicated to the second data storage medium 440.

Upon receiving a user command to duplicate the speech data from the first data storage medium 410 to the second data storage medium 450, the controller 430 reads out the speech data to a buffer (not shown) in the controller from the first data storage medium 410.

The controller 430 transmits the speech data stored in the buffer to the second data storage medium 450, and is informed of a reference point of time from the reference time generator 420, extracts a predetermined amount of the speech data as unit sample data for a predetermined time, and outputs the extracted speech data to the data decoder 470.

The unit sample data indicates a section of speech data that is reproduced for a predetermined time. If 100 seconds of speech data is duplicated for 10 seconds and the length of the unit sample data is 5 seconds, the controller 430 extracts two random adjacent sections of five-second speech data from the 100 seconds of speech data and outputs the extracted sections to the data decoder 470.

The data decoder 470 decodes at least one unit sample data output from the controller 430 and outputs the result of decoding to the noise reducing unit 480.

When speech signals are reproduced to correspond to respective unit sample data decoded by the data decoder 470, discontinuities of the speech signals are caused at connection points of the speech signals, thus generating high-frequency noise.

To minimize the high-frequency noise, the noise reducing unit 480 reduces the magnitudes of the speech signals at the connection points.

The noise reducing unit 480 outputs the speech signals, from which noise are reduced, to a speaker (not shown) so that a user can listen to speech corresponding to the speech signals.

Meanwhile, the controller 430 produces information regarding a progress in speech data duplication using percentages, graphs, and characters. The information regarding the progress includes a total size of the speech data that is duplicated, includes a point of time when the data duplication is expected to end, and time left until the end of the data duplication, the times being measured using the first or second data storage medium 410 or 450 whose recording or reading speed is slower.

The controller 430 outputs the information regarding the progress to the graphics processor 490 and the graphics processor 490 outputs the received information to a display (not shown). If there is no need to show the information regarding the progress to the user, the graphics processor 490 and the display are not required.

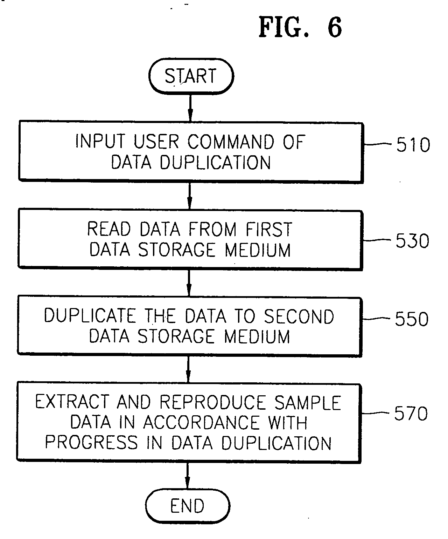

Hereinafter, a digital data duplicating method according to the present invention will be described with reference to Figure 6. Figure 6 is a flowchart illustrating a digital data duplicating method according to an embodiment of the present invention. Here, digital data, which is to be duplicated, may be video object data, still image data, or speech data.

First, in operation 510, a digital data duplicating apparatus, which performs the digital data duplicating method according to an embodiment of the present invention, is given a user command to duplicate data from a first data storage medium to a second data storage medium.

In operation 530, the apparatus reads out the data from the first data storage medium.

In operation 550, the apparatus duplicates the read data to the second data storage medium.

In operation 570, while duplicating the data, the apparatus extracts and reproduces sample data from the data so that a user can watch or listen to the contents of the data. Operation 570 may be variously embodied depending on the kind of data to be duplicated.

For instance, if the data is video object data, the apparatus selects, decodes, and reproduces key picture data as the sample data. In this case, information regarding the location of the key picture data is stored together with encoded video object data in the first data storage medium before selecting, decoding, and reproducing the key picture data.

If the data is still image data, a predetermined number of still image data is decoded and reproduced during duplication of the still image data, in accordance with a progress in the data duplication.

If the data is speech data, a predetermined amount of unit sample data is decoded and output to a speaker so that a user may listen to speech corresponding to the data during duplication of the data, considering the length of the speech data and the predetermined length of the unit sample data.

When the data is speech data and a plurality of unit sample data is extracted and decoded, discontinuities of reproduced speech signals are caused at connection points of the speech signals, thus generating high-frequency noise. The speech signals being reproduced correspond to the extracted unit sample data, respectively, and the discontinuities occur when a first speech signal is connected, to a second speech signal to reproduce the predetermined amount of speech data to the speaker.

Accordingly, if data to be duplicated is speech data, the digital data duplicating method according to an embodiment of the present invention further includes reducing high-frequency noise by reducing the magnitude of a signal at connection points of the speech signals so as to minimize the high-frequency noise.

Also, the digital data duplicating method may further include displaying information regarding a current progress in data duplication on a display, using percentages, graphs, or characters. The information includes a total size of the data to be duplicated, a point of time when the data duplication expects to end, and the time left until the end of the data duplication, the times being measured using the first or second data storage medium whose recording or reading speed is slower.

The present invention can be embodied as a computer readable code in a computer readable medium. Here, the computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable recording medium can be distributed among computer systems that are interconnected through a network, and the present invention may be stored and implemented as a computer readable code in the distributed system.

As described above, a digital data duplicating apparatus and method according to the present invention are capable of extracting and reproducing sample data from data that is being duplicated from one data storage medium to another data storage medium, during duplication of the data. Accordingly, it is possible for a user to easily check the progress in the data duplication and the contents of the data. Further, duplication and reproduction of data are performed at the same time, thus removing boredom during the data duplication.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for duplicating data from a first data storage medium (110) to a second data storage medium (150), the apparatus comprising:
a controller (130) which receives the data stored in the first data storage medium (110), duplicates the data to the second data storage medium (150), extracts sample data, which is used to indicate a progress in data duplication, from the data, and outputs the sample data; and
a data decoder (170) which receives, decodes, and outputs the sample data from the controller (130).

2. The apparatus of claim 1, wherein when the data is video object data containing a plurality of key picture data, the controller (130) extracts the key picture data from the video object data and outputs the key picture data to the data decoder (170) in accordance with the progress in the data duplication.

3. The apparatus of claim 2, wherein when the video object data is MPEG data, the controller (130) extracts intra picture data from the MPEG data and outputs the intra picture data to the data decoder (170).

4. The apparatus of claim 2 or 3, wherein the controller (130) extracts and outputs the key picture data to the data decoder (170) so that reproduction of the key picture data is in phase with duplication of the data.

5. The apparatus of any of claims 2 to 4, further comprising:
a key picture placement information storage unit (220); and
wherein the controller (130) controls the first data storage medium (110) to output key picture placement information stored in the first data storage medium (110) to the key picture placement information storage unit (220), and extracts the key picture data from the data and outputs the key picture data to the data decoder (170), based on the key picture placement information output from the key picture placement information storage unit (220).

6. The apparatus of claim 2, wherein the controller (130) generates and outputs information regarding the progress in the data duplication, and the apparatus further comprising:
a graphic processor (290) which receives the information regarding the progress from the controller (130), receives the decoded key picture data from the data decoder (170), combines the information regarding the progress and the key picture data, and outputs the result of decoding.

7. The apparatus of claim 1, wherein when the data is video object data containing a plurality of picture data and each picture contained in the video object data is a key picture, the controller (130) extracts the key picture data from the video object data and outputs the key picture data to the data decoder (170), in accordance with the progress in the data duplication.

8. The apparatus of claim 7, wherein the controller (130) extracts and outputs the key picture data to the data decoder (170) so that reproduction of the key picture data is in phase with the duplication of the data.

9. The apparatus of claim 7 or 8, further comprising:
a key picture placement storage unit (220); and
wherein the controller (130) controls the first data storage medium (110) to output key picture placement information stored in the first data storage medium (110) to the key picture placement information storage unit (220), and extracts the key picture data from the data and outputs the key picture data to the data decoder (170), based on the key picture placement information output from the key picture placement information storage unit (220).

10. The apparatus of claim 7, 8 or 9, wherein the controller (130) generates and outputs information regarding a progress in the data duplication, the apparatus further comprising:
a graphics processor (290) which receives the information regarding the progress from the controller (130), receives the decoded key picture from the data decoder (170), combines the information regarding the progress and the decoded key picture, and outputs the result of combination.

11. The apparatus of claim 1, wherein when the data contains still images, the controller (130) extracts the still images from the data and outputs the still images to the data decoder (170), in accordance with the progress in the data duplication.

12. The apparatus of claim 11, wherein the controller (130) extracts and outputs a predetermined number of the still images to the data decoder (170) at predetermined intervals of time.

13. The apparatus of claim 12, further comprising:
a reference time generator (320); and
wherein the controller (130) extracts and outputs a predetermined number of the still images to the data decoder (170) at predetermined intervals of time, based on a reference point of time output from the reference time generator (320).

14. The apparatus of claim 11, 12 or 13, wherein the controller (130) generates and outputs information regarding a progress in the data duplication, the apparatus further comprising:
a graphics processor (290) which receives the information regarding the progress from the controller (130), receives the decoded still images from the data decoder (170), combines the information regarding the progress and the still images, and outputs a combination result.

15. The apparatus of claim 1, wherein when the data is speech data, the controller (130) extracts sample data, which is used to indicate the progress in the data duplication, from the speech data and outputs the sample data to the data decoder (170), in accordance with the progress in the data duplication.

16. The apparatus of claim 15, further comprising:
a reference time generator (320); and
wherein the controller (130) extracts at least one unit sample data from the speech data and outputs the at least one unit sample data to the data decoder (170), based on a reference point of time output from the reference time generator (320).

17. The apparatus of claim 16, wherein the data decoder (170) receives a plurality of unit sample data, decodes the plurality of sample data into a plurality of audio signals, and outputs the plurality of audio signals, and the apparatus further comprising:
a noise reducing unit (480) which receives the plurality of audio signals from the data decoder (170) and reduces noise generated at signal sections where respective audio signals are connected to one another.

18. A method of duplicating data from a first data storage medium (110) to a second data storage medium (150), the method comprising:
reading the data from the first data storage medium (110);
duplicating the data to the second data storage medium (150); and
extracting and reproducing sample data, which is used to indicate a progress in the data duplication, from the data in accordance with the progress in the data duplication.

19. The method of claim 18, wherein when the data is video object data containing a plurality of key picture data, the key picture data is extracted and reproduced from the video object data in accordance with the progress in the data duplication.

20. The method of claim 19, wherein when the data is MPEG data, intra picture data is extracted and reproduced from the MPEG data during the extracting and reproducing the sample data.

21. The method of claim 19 or 20, wherein during the extracting and reproducing the sample data, the key picture data is reproduced such that the reproduction of the key picture data is in phase with the duplication of the data.

22. The method of claim 19, 20 or 21 wherein during the extracting and reproducing the sample data, the key picture data is extracted and reproduced from the video object data based on key picture placement information stored in the first data storage medium (110).

23. The method of claim 19, 20, 21 or 22, further comprising:
combining the key picture data, which is extracted from the data to indicate the progress in the data duplication, and information the progress in the data duplication; and
reproducing the result of the combining.

24. The method of claim 18, wherein when the data is video object data containing a plurality of picture data and all of the picture data contained in the video object data are key picture data, the key picture data is extracted and reproduced from the video object data in accordance with the progress in the data duplication.

25. The method of claim 24, wherein during the extracting and reproducing the sample data, the key picture data is reproduced such that the reproduction of the key picture data is in phase with the duplication of the data.

26. The method of claim 24 or 25, wherein during the extracting and reproducing the sample data, the key picture data is extracted and reproduced from the video object data based on key picture placement information stored in the first data storage medium (110).

27. The method of claim 24, 25 or 26, further comprising:
combining the key picture data, which is extracted to indicate the progress in the data duplication, and information regarding the progress in the data duplication; and
reproducing the result of the combining.

28. The method of claim 18, wherein when the data contains still images, the still images are extracted and reproduced from the data in accordance with the progress in the data duplication.

29. The method of claim 28, wherein when the data contains still images, during the extracting and reproducing the sample data, a predetermined number of still images are extracted and reproduced at predetermined intervals of time.

30. The method of claim 28 or 29, further comprising:
combining the still images extracted to indicate the progress in the data duplication and information regarding the progress, wherein the result of the combination is reproduced.

31. The method of claim 18, wherein when the data is speech data, sample data is extracted and reproduced from the speech data in accordance with the progress in the data duplication.

32. The method of claim 31, wherein during the extracting and reproducing the sample data, at least one unit sample data is extracted and reproduced.

33. The method of claim 31 or 32, wherein the extracting and reproducing the sample data comprises:
decoding a plurality of unit sample data and outputting the result of decoding as a plurality of audio signals;
reducing noise generated at signal sections where respective ones of the audio signals are connected to one another; and
reproducing the audio signals from which noise is reduced.

34. A computer readable recording medium recording a program that executes a method of duplicating data from a first data storage medium (110) to a second data storage medium (150), wherein the method comprises:
reading the data from the first data storage medium (110) ;
duplicating the data to the second data storage medium (150); and
extracting and reproducing sample data, which is used to indicate a progress in the data duplication, from the data.

35. A reproduction apparatus, comprising:
a first storage medium storing data;
a second storage medium storing data;
a controller (130) controlling a duplication of the data from the first storage medium to the second storage medium, wherein the controller (130) extracts a predetermined portion of the data corresponding to progress of the duplication of the data; and
a decoder decoding the extracted predetermined portion of the data.

36. The apparatus of claim 35, wherein the controller (130) extracts and outputs graphical progress information based on a size of the data to be duplicated and a speed of one of the first storage medium and the second storage medium, selected based on reading and recording speed.

37. The apparatus of claim 36, further comprising a display receiving and displaying the extracted predetermined portion of the data and the graphical progress information in phase with the progress of the duplication of the data.

38. The apparatus of claim 37, wherein the data is video object data and the controller (130) extracts key picture data from the video object data.

39. The apparatus of claim 37, wherein the data is MPEG-2 data and the controller (130) extracts only I-pictures.

40. The apparatus of claim 37, wherein the data is motion JPEG data and the controller (130) extracts a plurality of predetermined key picture data from the video object data.

41. The apparatus of any of claims 36 to 40, wherein the data is still image data and the controller (130) extracts a predetermined number of still image data corresponding to individual still images.

42. The apparatus of claim 41, further comprising a display receiving and displaying the predetermined number of still image data and the graphical progress information in phase with the progress of the duplication of the data.

43. The apparatus of any of claims 36 to 41, wherein the data is voice data and the controller (130) extracts a predetermined amount of voice sample data.

44. The apparatus of claim 43, further comprising a noise filter reducing noise components of the predetermined amount of voice sample data.

45. The apparatus of claim 44, further comprising a speaker to reproduce the predetermined amount of voice sample data with reduced noise components in phase with the progress of the duplication of the data.

46. The apparatus of claim 45, further comprising a display receiving and displaying the graphical progress information in phase with the progress of the duplication of the data.

47. The apparatus of claim 45, further comprising:
a reference time generator (320) generating a reference time, wherein the controller (130) extracts the predetermined amount of voice sample data based on the reference time.

48. The apparatus of claim 47, wherein the controller (130) extracts a plurality of predetermined amounts of voice sample data based on the reference time in phase with the progress of the duplication of the data.

49. The apparatus of any of claims 36 to 48, wherein the first storage medium is one of a hard disc drive and an optical recording disc and the second storage medium is the other of the hard disc drive and the optical recording disc.
